# EUROPEAN PATENT APPLICATION

(11) **EP 3 988 425 A1**
(43) Date of publication of application: **27.04.2022**
(21) Application number: 20203225.6
(22) Date of filing: 22.10.2020
(51) Int. Cl.: B62B 5/06

(54) **COVER**

(71) Applicant: Drenth Inkoop B.V., 9403 TV Assen (NL)
(72) Inventor: Roman, Constante Guiseppe Vittorio Jan, 5931 JN Tegelen (NL)
(74) Representative: Nederlandsch Octrooibureau

(57) **Abstract**

A cover (10) including a body portion (20) having an upper surface, lower surface and a thickness between the upper surface and lower surface, and at least one spring member (30) inside the body portion between the upper surface and the lower surface. The body portion including a first layer on the upper surface and a second layer on the lower surface and a middle layer between the first layer and the second layer. The middle layer being a flexible material.

## Description

### TECHNICAL FIELD

The present invention relates to a cover and a method of manufacturing a cover. Such a cover can be used for various things, for example, to cover a handle on a shopping cart, other types of handles or railings and other devices or structures.

### BACKGROUND

There are various known ways for protecting users of shopping carts from unsanitary cart handles, including washing the handle between uses, wearing gloves, or installing cart handle cover. However, they all suffer from being inconvenient, awkward, and expensive. For example, washing the handle between uses is time consuming and takes the cart out of use for a time. Wearing gloves protects only the user, not others, for example, any children who may be riding in the cart's basket and chewing on the handle or others who need to move the car. Some cart handle covers are a piece of fabric to wrap around the handle and use Velcro to connect to itself to secure around the handle, which can be time consuming to wrap around and align the Velcro properly for connection.

Consequently, a need exists for, and it is an object of this invention to provide, a convenient and inexpensive way of protecting shopping cart users and riders from the unsanitary conditions of such carts.

### SUMMARY OF THE INVENTION

The present invention provides a cover for handles, for example, for shopping, supermarket and/or airport cart handles, helping to protect the sanitation and therefore health of users and riders.

An integrated clicking or "snap-on" cover which allows a placement and a removal action without physical contact with a cart handle is provided. Therefore, no physical contact is needed by the user with the cart handle in order to successfully place the cover on the shopping cart handle.

One aspect of the invention provides a cover including a body portion having an upper surface, lower surface and a thickness between the upper surface and lower surface; and at least one spring member inside the body portion between the upper surface and the lower surface. Such a cover can provide the easy click or "snap-on" for a user to place or remove the cover by bringing the spring member from a first position to a second position at least partially around a handle or other object.

According to an embodiment, the body portion comprises a first layer on a first surface, a second layer on a second surface and a middle layer between the first layer and the second layer. Optionally, the middle layer is a flexible material, for example neoprene. Further optionally, the first layer and/or the second layer can be a nylon material. Such a configuration can provide a strong and durable cover for use. The flexible material of the middle layer allows the cover to go through many cycles of moving from a first state to a second state without breaking or deteriorating. Use of a layers on first and second surfaces (e.g., the upper surface and lower surface) can help to ensure that the major surface have desired characteristics for strength, grip and durability. Using nylon material can ensure strength for usage and to ensure that the spring member(s) stay contained inside the body portion.

According to an embodiment, the middle layer comprises a first middle layer and a second middle layer. These can be the same material or different materials, and can be joined together in different ways, for example, adhesive, heating, welding, etc. Using first and second middle layers can help with easier manufacture as well as helping to ensure that the at least one spring member stays enclosed within the cover for proper functioning of the cover.

According to an embodiment, the cover has a first state wherein the body portion with the at least one spring member is substantially flat, and a second state wherein the body portion with the at least one spring member forms a curved shaped along an axis of curvature. Optionally, the axis of curvature extends along a length of the cover. Such a configuration allows for wrapping around longer handles, such as those of shopping carts. The substantially flat, first state allows for easy storage and transportation when not in use as well as easy alignment for use. The second, curved state allows for easy and secure wrapping (at least partially) around a handle or other structure for use. This allows the cover to be used, moving from one state to another (and back) without needed securing devices such as clips, Velcro, locks, etc. which break down over use and require more time, skill and precise alignment for securing for use.

According to an embodiment, the at least one spring member holds the body portion in either the first state or the second state. Optionally, the spring member is a bistable spring member that is stable in the first (extended) state, and in the second (coiled) state. This allows the spring member to securely hold the cover in either state until a user triggers the spring member to move into the other state. The trigger to move into the second, coiled state can be to simply start to bend the spring ends in the direction of the coil. This will cause the spring member to move from the extended first state to the coiled second state. The trigger for moving back into the first extended state can simply be to move the ends back to an extended position away from each other, causing the spring member to snap back into the first state.

According to an embodiment, the cover comprises a plurality of spring members. This can be, for example, 2-5 spring members which are evenly spaced in the cover body portion. Such a configuration can ensure a stable wrapping around a handle or other extended device.

According to an embodiment, the cover comprises a width of at least 10 cm, preferably 13 cm; and a length between 30 cm and 50 cm, preferably 43 cm. Optionally, the thickness could be 3-8 mm, for example, 4.5mm. Such a configuration can be especially suited for cart handles which tend to be long and thin, allowing for coverage of most of the length of the cart handle to ensure proper manoeuvrability. The thickness can be ideal for ensuring the spring member(s) stays enclosed and in place within the body portion, and ensuring a nice soft gripping surface for a user.

According to an embodiment, the cover is configured to fit around a cart handle. This can be a shopping cart, airport cart or any other handle which a person needs to touch and/or manoeuvre for use. Such a cover can easily be snapped onto the handle so that the user does not have to touch the actual handle, and still allow the user to manoeuvre the cart with the same precision as if they were in contact with the actual handle. The cover, with the spring member(s) coils around the handle, securing such that there is little to no movement and it stays on for the intended duration of use. When done, the user can simply remove the cover without having to touch the handle.

According to an embodiment, the first layer and the second layer have at least one of a different colour, pattern and roughness. Having a different colour, pattern and/or roughness can help with identifying which side is the side which the user should touch versus the side which should connect with the handle. Additionally, pattern and/or roughness can help with slip and/or grip, ensuring the cover stays on the cart and the user has a comfortable grip. Further, colours and/or patterns can give a user information or provide a branding and/or advertising space on the cover.

Another aspect of the invention provides a method of manufacturing a cover. The method includes obtaining a body portion with a first surface, a second surface and a thickness between; and placing a plurality of bistable spring members inside the body portion. Such a method can make a simple, but strong cover which can easily move from a non-use state to a stable use state. Placing the plurality of spring members inside the body portion ensures that they will stay in place to securely hold the cover in either of the states.

According to an embodiment, the method further comprises placing a first layer on the first surface of the body portion and a second layer the second surface of the body portion. Optionally the first layer 40 and/or the second layer 41 is a nylon material. Further optionally, the material can be connected with adhesive, heat, sewing or any other method. The layers can cover just an upper surface and lower surface, or can extend to connect around the middle body portion, totally enclosing it.

According to an embodiment, placing a plurality of bistable spring members inside the body portion comprises gluing a first middle layer of the body portion and a second middle layer of the body portion such that the plurality of spring members are enclosed between the first middle layer and the second middle layer. Using first and second middle layers can ensure easier manufacture while maintaining the spring members inside the body portion.

The present application and the proposals herein seek to address one or more of the problems noted above and/or seek to provide improved covers especially in connection with the shopping user experience.

### BRIEF DESCRIPTION OF THE DRAWINGS

These and other aspects of the present invention will be discussed in more detail below, with reference to the attached drawings.
Figure 1A shows a cross sectional view of a cover according to an embodiment of the current invention.
Figure 1B shows a partial cross sectional view of a cover according to the current invention.
Figure 2A shows a plan view of the cover 10 in the first state according to the current invention. Figure 2B shows a front view of the cover 10 in the first state according to the current invention. Figure 2C shows a side view of the cover 10 in the first state according to the current invention.
Figure 3A shows a perspective view of the cover 10 in the second state according to the current invention.
Figure 3B shows a side view of the cover 10 in the second state according to the current invention.

### DETAILED DESCRIPTION OF EMBODIMENTS

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

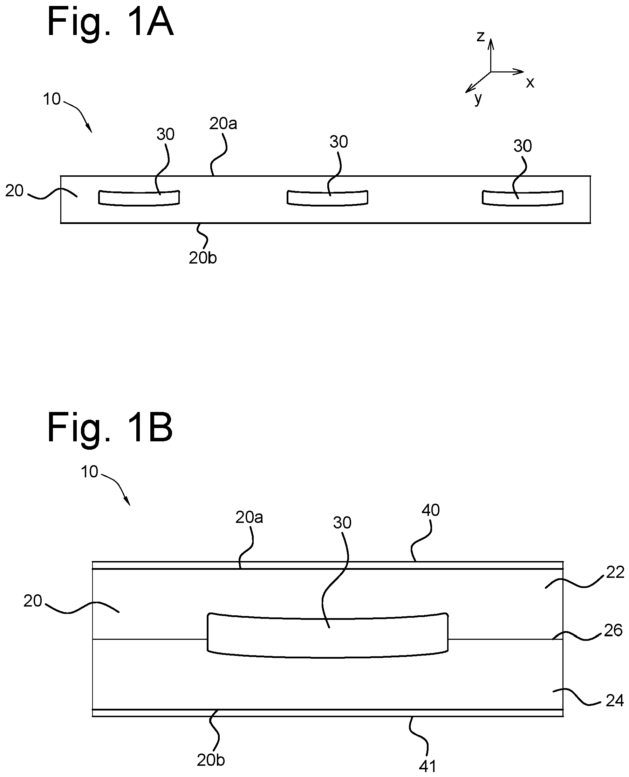

Coordinate axes in the x, y and z direction are shown in each figure to assist in the explanation of the relative arrangement of features of the cover. Figures 1A-1B, figures 2A-2C and figures 3A-3B are discussed here to aid understanding of the subsequent discussion of the shape and configuration of the cover.

Figure 1A shows a cross sectional view of a cover 10 according to an embodiment. The cover 10 comprises a body portion 20 having an upper surface 20a, a lower surface 20b and a thickness between the upper surface and lower surface, and at least one spring member 30 inside the body portion between the upper surface and the lower surface.

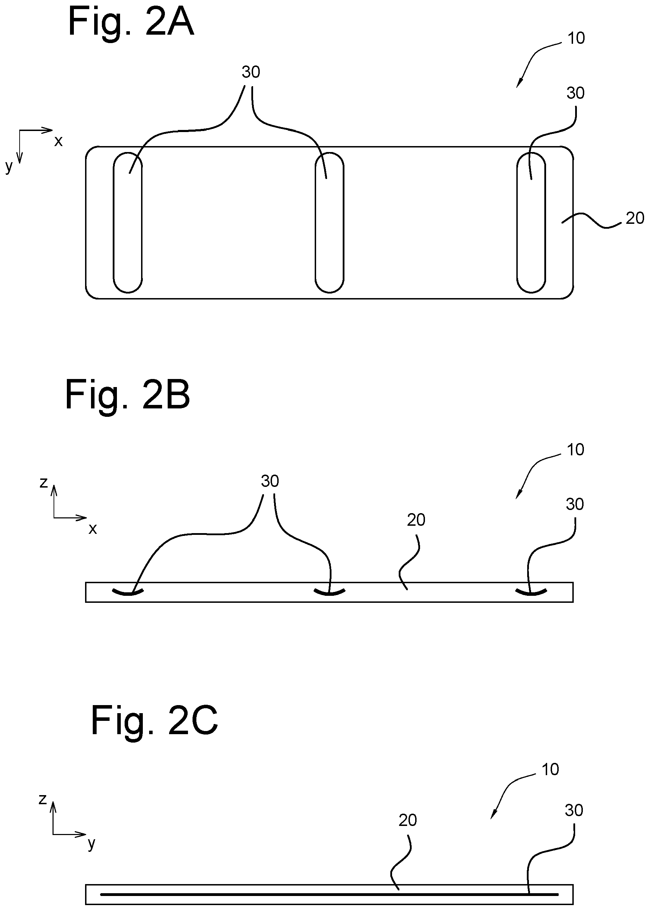

In the embodiment shown, the cover 10 has three spring members 30 spaced apart inside the body portion 20. Other embodiments could have fewer or more spring members, depending on the size of the cover, and/or size of the spring members, but would generally be in the range of 2-5 spring members. The spring members 30 add strength and support to the cover, providing a strong cover despite using lightweight material. Spring members spaced apart inside the body portion provide the structure to bring the cover from a first state to a second state (discussed in detail in relation to Figs. 2A-3B), and ensure secure wrapping, particularly when the cover fits around a shopping cart handle, as spring members in the second state curve to bend the cover 10 to at least partially surround a cart handle.

The dimensions of cover 10 shown are a length (in the x-axis) between 30 cm and 50 cm, preferably about 43 cm, a width (in the y-axis) of at least 10 cm, preferably about 13 cm, and a thickness (in the z-axis) between 3 mm and 8 mm, preferably about 5 mm. These particular dimensions ensure that the cover 10 is able to fit around most typical cart handles. These dimensions can vary depending on the size and shape of the cart handle or other object to which the cover will connect around.

Figure 1B shows a partial cross sectional view of a cover 10 according to the current invention.

In the embodiment shown, the body portion 20 includes a first layer 40 on the upper surface 20a, a second layer 41 on the lower surface 20b and a middle layer between the first layer and the second layer.

The first layer 40 and/or the second layer 41 is a nylon material. Using a nylon material for the upper and/or lower layer provides for a very strong and elastic upper and/or lower layer of cover 10. This provides a high resilience for cover 10, which is especially useful to ensure that the at least one spring member 30 remains inside the cover 10 and does not break out, thereby ensuring cover functionality. Using a nylon upper and/or lower layer can also make cover 10 easy to wash, allowing cover 10 surface(s) to be disinfected with common cleaning products. This can be very useful when cover 10 is used as a cover for a shopping cart handle, with cover 10 allowing for the user to avoid the direct interaction of the user's hands and the shopping cart handle, thereby keeping germs present on shopping cart handle at distance from the user's hands.

Optionally, the first layer and the second layer can have at least one of a different colour, pattern and roughness. By having different colour, pattern and/or roughness on each of the first layer 40 and/or the second layer 41, the user of the cover can easily distinguish both sides of the cover. For example, the first layer 40 and/or the second layer 41 can be covered, partially or in full, by an external layer. The external layer allows for full colour artwork or other printing on any portion of the first layer 40 and/or the second layer 41 when desireable. For example, the full colour artwork can comprise a printed logo of a commercial business.

In the embodiment shown in Fig. 1B, the middle layer comprises a first middle layer 22 and a second middle layer 24. Other embodiments may comprise more middle layers, depending on the size of body portion, materials used, amount and/or types of spring members placed inside the body portion or other factors. The first middle layer 22 and the second middle layer 24 are connected through a contact surface 26 by welding or melting them together or by using an adhesive. In the present invention various types of adhesives can be used, these includes resins, hot melt adhesives, synthetic, natural, and the like. In some embodiments, the layers could even be welded or melted together.

The first middle layer 22 and/or the second middle layer 24 is a flexible material, for example, neoprene material. Using such neoprene material can make for a very strong and durable cover, with an elongation break (the extent in percentage a material can be strained before it breaks) of at least 200%, a tensile strength of at least 3 kg/cm², a tear strength of at least 1.5 kg/cm², a density of about 0.16 g/cm³, a shrinkage of less than 4 at 70°C per 24h, and a compression set between 15% and 25% within 22h of compression. These mechanical properties are for example purposes only, and may vary depending on the specific material, dimensions, etc. Additionally, using neoprene in a cover 10 to be used with shopping cart handles is beneficial as it can be adapted easily to the different forms of cart handles and be resistant to pulls, for example, from children or getting caught on something.

In an preferable embodiment, each spring member 30 is a metal spring member. Alternatively, each of at least one spring member can comprise plastic material, or only other suitable material.

According to the current invention, each at least one spring member 30 holds the body portion 20 in either a first state or a second state. The first state and the second state are described hereinafter.

Figure 2A shows a plan view of the cover 10 in the first state according to the current invention. Figure 2B shows a front view of the cover 10 in the first state according to the current invention. Figure 2C shows a side view of the cover 10 in the first state according to the current invention.

The cover 10 has a first state wherein the body portion 20 with each spring member 30 is substantially flat.

Each spring member 30 has a substantially curved rectangular prism shape with smooth edges. In the plan view, as shown in figure 2A, each spring member 30 has substantially rectangular flat shape in the length L dimension of the cover 10.

In the front view, each spring member 30 has a slightly curved shape. The spring member 30 has a concave shape viewed from the upper layer 24 and convex shape viewed from the lower layer 22. This slightly curved shape allows the spring member 30 to form a curved shaped along an axis of curvature when the cover 10 is in the second state. The axis of curvature is parallel to x-axis.

The dimensions of the spring member 30 shown are a width (in the x-axis) between 10 cm and 20 cm, preferably about 11.3 cm, a length (in the y-axis) between 20 mm and 30 mm, preferably about 24 mm, and a thickness (in the z-axis) between 0.5 mm and 3 mm, preferably about 2 mm.

The length (in the y-axis) of the spring member 30 is slightly shorter that the width (in the y-axis) of the cover 10. By being slightly shorther, the spring member 30 is maintained inside the cover 10, not exposing the spring members.

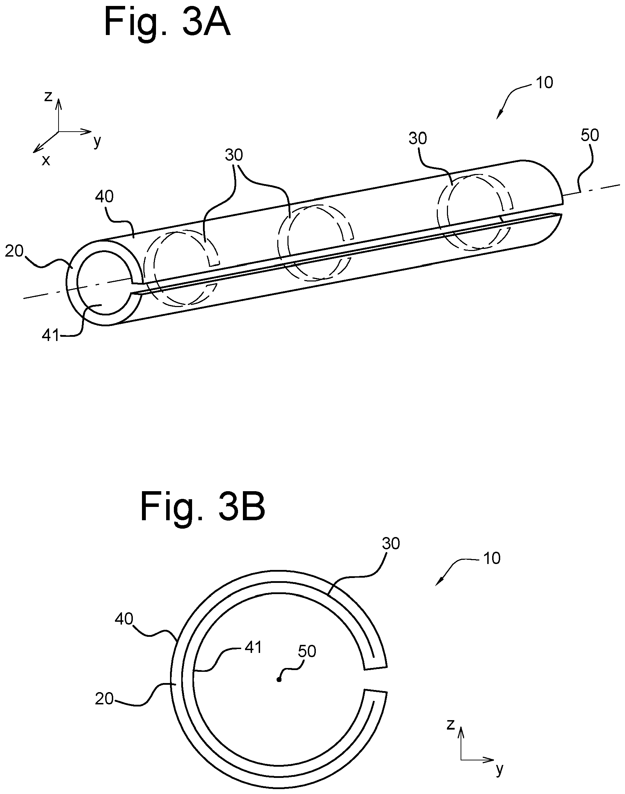

Figure 3A shows a perspective view of the cover 10 in the second state, and Figure 3B shows a side view of the cover 10 in the second state.

In the second state, the body portion 20 with the at least one spring member 30 forms a curved shaped along an axis of curvature 50. The axis of curvature 50 extends along a length of the cover 10. The axis of curvature is parallel to x-axis. In the embodiment of the present invention shown in Figs. 3A-3B, the cover, in the second state, is curved such that the first layer 40 has a radius of curvature between 15 mm and 30 mm, for example, around 22.5 mm. Optionally, in the second state, the first layer 40 can also be referred as an external layer and the second layer 41 can also be referred as an internal layer.

The cover 10 is held in either the first state (Figs. 2A-2C) or the second state (Figs. 3A-3B) by the spring members 30. The spring member 30 can be a flexible metallic bistable spring which is stable in both the first state where it is extended and substantially planar, and in the second state where it is coiled. Depending on the materials, layering, etc., the two stable states can vary, but will generally hold the cover in either the first state where it is substantially planar, or the second state where it curves around an axis.

Using one or more spring members 30 which are stable in two states allows for a simple cover 10 which can effectively be used in combination with a cart or other handle to allow cart usage and manoeuvrability without having to actually touch the handle. This protects the user from germs or anything else which may be on the handle and ensures that the user does not transfer any of their germs to the cart or other handle. The first stable, substantially planar state allows a user to easily align the cover 10 and then twist or bend the sides of the cover 10 around the handle. This triggers the spring mechanisms 30 to enter the second state curving and securing around a handle. After use, cover 10 can also be easily removed by simply pulling on the sides of the handle. As the cover 10 is flexible, it may be able to be removed which the spring mechanisms 30 are in the second state, or the sides can simply be extended to bring the spring mechanisms back into the first state to remove.

In another aspect, a method of manufacturing a cover 10 is disclosed. The method includes placing at least one spring member 30 inside a body portion 20, and placing a first layer 40 on an upper surface 20a of the body portion 20 and a second layer 41 a lower surface 20b of the body portion 20. The first layer 40 and/or the second layer 41 is a nylon material.

Optionally, placing at least one spring member 30 inside a body portion 20 can comprise gluing a first middle layer 22 of the body portion 20 and a second middle layer 24 of the body portion 20 such as the at least one spring member 30 is enclosed between the first middle layer 22 and the second middle layer 24. By gluing or sticking both layers together with an adhesive, the sliding of the middle layers and the spring member is reduced.

Optionally, the first middle layer and/or the second middle layer can be of a flexible material, for example, neoprene.

Optionally, placing the first layer 40 and the second layer 41 may comprise gluing the first layer and the second layer to the body portion 20. The first layer 40 is glued to the first middle layer 22 and the second layer 40 is glued to the second middle layer 24. The adhesive used for gluing the first layer 40 and the second layer 41 to the body portion 20 can be the same adhesive used for gluing a first middle layer 22 of the body portion 20 and a second middle layer 24 of the body portion 20 or can be a different adhesive.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

**1.** A cover (10) comprising:
a body portion (20) having an upper surface (20a), a lower surface (20b) and a thickness between the upper surface and lower surface, and
at least one spring member (30) inside the body portion between the upper surface and the lower surface.

**2.** The cover (10) of claim 1, wherein the body portion comprises a first layer (40) on a first surface, a second layer (41) on a second surface and a middle layer between the first layer and the second layer.

**3.** The cover (10) of any of the preceding claims, wherein the middle layer is a flexible material, preferably neoprene.

**4.** The cover (10) of any of the preceding claims, wherein the first layer (40) and/or the second layer (41) is a nylon material.

**5.** The cover (10) of any of claims 3-4, wherein the middle layer comprises a first middle layer (22) and a second middle layer (24).

**6.** The cover (10) of any preceding claim, wherein the cover has a first state wherein the body portion with the at least one spring member is substantially flat, and a second state wherein the body portion with the at least one spring member forms a curved shaped along an axis of curvature (50).

**7.** The cover of claim 6, wherein the axis of curvature extends along a length of the cover.

**8.** The cover (10) of any of claims 6-7, and wherein the at least one spring member holds the body portion in either the first state or the second state.

**9.** The cover (10) of any preceding claim, wherein the cover comprises a plurality of spring members.

**10.** The cover (10) of any preceding claim, wherein the cover comprises a width of at least 10 cm, preferably 13 cm; and a length between 30 cm and 50 cm, preferably 43 cm.

**11.** The cover (10) of any preceding claim, wherein the cover is configured to fit around a cart handle.

**12.** The cover (10) of any preceding claim, wherein the first layer and the second layer have at least one of a different colour, pattern and roughness.

**13.** The cover (10) of any preceding claim, wherein each of the at least one spring member (30) is a bistable spring.

**13.** Method of manufacturing a cover (10), the method comprising:
obtaining a body portion with a first surface, a second surface and a thickness between; and
placing a plurality of bistable spring members (30) inside the body portion (20).

**14.** The method of claim 13, and further comprising
placing a first layer (40) on the first surface (20a) of the body portion (20) and a second layer (41) the second surface (20b) of the body portion (20).
preferably wherein the first layer (40) and/or the second layer (41) is a nylon material.

**15.** Method of claim 13, wherein placing a plurality of bistable spring members inside the body portion (20) comprises gluing a first middle layer (22) of the body portion and a second middle layer (24) of the body portion such that the plurality of spring members are enclosed between the first middle layer and the second middle layer.
